# DEMANDE DE BREVET EUROPEEN

(11) **EP 2 127 994 A1**
(43) Date de publication de la demande: **02.12.2009**
(21) Numéro de dépôt: 09290386.3
(22) Date de dépôt: 26.05.2009
(51) Int. Cl.: B62B 1/12, A61G 5/00

(54) **Dispositif roulant pour transporter au moins une personne**

(30) Priorité: 29.05.2008 FR 0802929
(71) Demandeur: Bisch, Gilbert, 68440 Schlierbach (FR)
(72) Inventeur: Bisch, Gilbert, 68440 Schlierbach (FR)
(74) Mandataire: Nithardt, Roland

(57) **Abrégé**

La présente invention concerne un dispositif roulant (1) pour transporter au moins une personne et comportant un châssis (2) porté par au moins deux roues (3), des moyens récepteurs (4) pour porter ladite personne en position assise ou couchée, et des moyens de manutention (5) pour mettre en mouvement ledit dispositif par au moins une autre personne. Il est **caractérisé en ce que** les roues (3) sont montées sur un support de roues (20) assemblé au châssis (2) par une première liaison pivotante (21) autour d'un premier axe de rotation (RI) sensiblement vertical, le support de roues (20) étant mobile entre au moins une première position dans laquelle les roues (3) sont parallèles entre elles et à l'axe longitudinal (L) du dispositif roulant (1), et une seconde position dans laquelle les roues (3) sont alignées et confondues avec ledit axe longitudinal (L).

## Description

### Domaine technique :

La présente invention concerne un dispositif roulant pour transporter au moins une personne et comportant un châssis porté par au moins deux roues, des moyens récepteurs pour porter ladite personne en position assise ou couchée et des moyens de manutention pour mettre en mouvement ledit dispositif par au moins une autre personne.

### Technique antérieure :

Différents dispositifs roulants répondent à la définition ci-dessus. Dans le domaine spécifique du handicap, on connaît bien évidemment les chaises roulantes portées par deux grandes roues disposées au droit de l'assise et deux petites roues folles disposés à l'avant, comme celle décrite dans la publication US 5,732,786. Ces chaises sont pourvues de poignées à l'arrière permettant à une personne valide de pousser une personne à mobilité réduite assise dans la chaise roulante. Ces chaises roulantes peuvent être motorisées ou non, et sont adaptées pour rouler sur un sol régulier et suffisamment dur, comme par exemple une chaussée goudronnée. Lors de sorties en randonnée pédestre avec des personnes à mobilité réduite et dès que l'on souhaite aborder des chemins forestiers, plus ou moins accidentés, avec un dénivelé plus ou moins important, et dont le revêtement est meuble ou gras, ces chaises roulantes n'avancent plus. Certains dispositifs roulants ont vu le jour sous la forme de chariots pliables portés par une roue centrale et manutentionnés par deux personnes, une à l'avant et une à l'arrière, la personne transportée étant assise au milieu. Ce chariot reste relativement lourd à manipuler, est encombrant, et impose obligatoirement deux accompagnateurs pour une personne à mobilité réduite, ce qui réduit considérablement les possibilités de sortie pour un grand nombre de personnes handicapées. La mise en place de la personne à transporter sur ce type de chariot n'est pas non plus facilitée et demande au moins deux accompagnateurs supplémentaires. De ce fait, les promenades sont limitées en nombre, en durée et en variété de lieux de randonnée.

Dans un autre domaine, celui des secours, on a besoin de dispositifs permettant de transporter une personne accidentée. Lorsqu'il y a de la neige, on utilise des luges aménagées avec un brancard, et lorsqu'il n'y a pas de neige, on utilise un brancard porté par deux secouristes ou on fait appel à l'hélitreuillage. Il n'existe pas à ce jour de dispositif roulant conçu pour ce type d'intervention.

### Exposé de l'invention :

La présente invention vise à apporter une solution aux problèmes évoqués ci-dessus en proposant un dispositif roulant polyvalent, qui puisse convenir à une personne à mobilité réduite qu'elle soit handicapée ou accidentée, qui soit léger, peu encombrant, très facile à mettre en oeuvre et à manipuler, transportable aisément, qui permet le chargement aisé de la personne, qui puisse rouler sur une grande variété de terrains et pour lequel une seule personne valide suffit pour le tracter ou le pousser.

Dans ce but, l'invention concerne un dispositif roulant du genre indiqué en préambule, **caractérisé en ce que** lesdites roues sont montées sur un support de roues assemblé audit châssis par une première liaison pivotante autour d'un premier axe sensiblement vertical, le support étant mobile entre au moins une première position dans laquelle les roues sont parallèles entre elles et à l'axe longitudinal du dispositif roulant et une seconde position dans laquelle les roues sont alignées et confondues avec ledit axe longitudinal.

Dans une forme de réalisation préférée, la première liaison pivotante coopère avec des moyens de verrouillage agencés pour en position déverrouillée autoriser le déplacement du support de roues de la première position à la seconde position et inversement, et en position verrouillée interdire ce déplacement, ces moyens de verrouillage prouvant être commandés et/ou à distance depuis les moyens de manutention par une liaison à câble.

La première liaison pivotante peut comporter au moins deux plateaux, l'un solidaire du châssis et l'autre solidaire du support de roues, assemblés par un pivot, et les moyens de verrouillage peuvent comporter au moins un doigt de blocage monté sur l'un des plateaux pour coopérer avec au moins deux crans d'indexage prévus dans l'autre plateau définissant lesdites première et seconde positions.

Dans la forme de réalisation préférée, chaque roue est elle-même montée sur un support d'essieu pivotant assemblé au support de roues par une seconde liaison pivotante autour d'un second axe de rotation sensiblement vertical, chaque roue étant mobile pour rester parallèle à l'axe longitudinal du dispositif roulant quelque soit la position du support de roues.

Chaque seconde liaison pivotante peut coopérer avec des moyens de verrouillage agencés pour en position déverrouillée autoriser le pivotement de la roue, et en position verrouillée interdire ce pivotement, ces moyens de verrouillage pouvant être commandés manuellement et/ou à distance depuis les moyens de manutention par une liaison à câble.

La seconde liaison pivotante peut comporter au moins un roulement à billes ou similaire monté entre le support de roues et le support d'essieu de chaque roue par un pivot, et des moyens d'indexage agencés pour limiter le pivotement de chaque roue.

Les moyens d'indexage peuvent comporter au moins deux platines, l'une solidaire du roulement à billes et l'autre solidaire du support d'essieu, un pion solidaire d'une des platines circulant dans une piste prévue dans l'autre platine et s'étendant sur un secteur angulaire inférieur à 360°.

Les moyens de verrouillage peuvent comporter au moins un doigt de blocage monté sur l'une des platines pour coopérer avec au moins deux crans d'indexage prévus dans l'autre platine définissant les positions dans lesquelles la roue est parallèle à l'axe longitudinal du dispositif roulant dans les première et seconde positions du support de roues.

Dans la forme de réalisation préférée, les moyens de manutention comportent des bras de transport montés sur le châssis par un premier axe de pivotement, ces bras de transport étant mobiles entre au moins une position de transport dans laquelle ils sont relevés et aptes à être saisis manuellement par une personne en position debout, et une position de repos des laquelle ils sont abaissés pour reposer au sol et stabiliser le dispositif roulant. Ils peuvent chacun être constitués d'au moins deux tronçons articulés entre eux, autour d'un second axe de pivotement parallèle au premier axe de pivotement, pour être mobiles entre une position déployée et une position repliée de stockage ou de transport.

Le support de roues comporte, avantageusement, au moins une lame en acier ressort agencée pour constituer au moins en partie des moyens amortisseurs du dispositif roulant. Et le support de roues est, avantageusement, monté sur le châssis par un balancier autour d'un axe de rotation perpendiculaire au premier axe de rotation et agencé pour compléter au moins en partie les moyens amortisseurs du dispositif roulant.

### Description sommaire des dessins :

La présente invention et ses avantages apparaîtront mieux dans la description suivante d'un mode de réalisation donné à titre d'exemple non limitatif, en référence aux dessins annexés, dans lesquels:
- la figure 1 est une vue de côté du dispositif roulant selon l'invention, les roues étant parallèles et les bras de transport étant représentés dans leurs deux positions : de transport en traits interrompus et de repos en traits forts,
- la figure 2 est une vue avant de la figure 1,
- la figure 3 est une vue similaire à la figure 1, les roues étant alignées et les bras de transport en position de transport,
- la figure 4 est une vue agrandie du détail A de la figure 3 représentant la première liaison pivotante entre le support de roues et le châssis,
- la figue 5 est une vue agrandie du détail B de la figure 3 représentant à la fois l'articulation entre les bras de transport et le châssis, et la seconde liaison pivotante entre le support d'essieu et le support de roues,
- la figure 6 est une vue agrandie du détail C de la figure 3 représentant l'articulation entre deux tronçons des bras de transport,
- la figure 7 est une vue de dessus du dispositif roulant de la figure 3 sans le siège,
- la figure 8 est une vue agrandie du détail D de la figure 7 représentant la seconde liaison pivotante entre le support d'essieu et le support de roues,
- la figure 9 est une vue agrandie du détail E de la figure 7 représentant l'articulation du bras de transport sur le châssis,
- la figure 10 est une vue agrandie du détail F de la figure 7 représentant l'articulation des deux tronçons du bras de transport, et
- la figure 11 est une vue de côté du dispositif roulant tracté par un animal.

### Illustrations de l'invention et meilleure manière de la réaliser :

En référence aux figures, le dispositif roulant 1 selon l'invention est destiné à transporter au moins une personne en position assise ou couchée, selon le domaine technique dans lequel il est utilisé. Il comporte un châssis 2 porté par au moins deux roues 3, des moyens récepteurs 4 pour porter la personne et des moyens de manutention 5 pour mettre en mouvement le dispositif roulant 1 par au moins une autre personne.

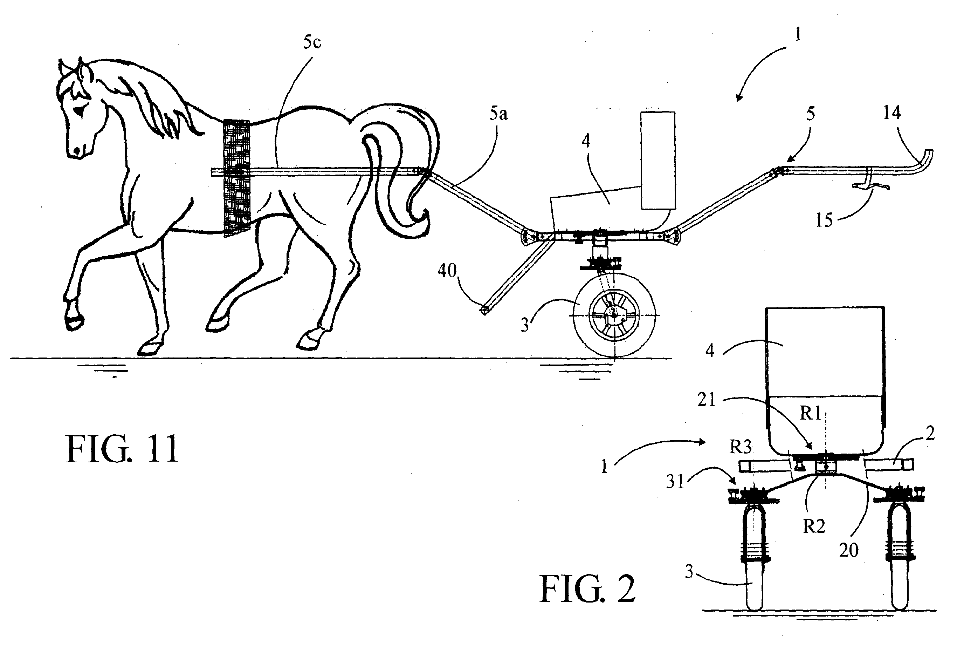

Dans l'exemple illustré, les moyens récepteurs sont constitués d'un siège 4, par exemple du type baquet, associé à des cales pieds 40 (cf. fig. 11) qui peuvent être réglables et démontables. Cet exemple n'est pas limitatif, le siège 4 pouvant être remplacé par tout autre type de siège, simple ou double, fixe ou réglable, monté sur des glissières longitudinales, etc. ou par une banquette, un brancard ou similaire pour transporter la personne en position semi allongée ou allongée en fonction des besoins. Ces moyens récepteurs peuvent être complétés par des systèmes amortisseurs, des sangles de maintien de la personne, etc. De préférence, les moyens récepteurs 4 sont conçus dans une structure légère, par exemple en matières synthétiques moulées ou injectées. Ils sont assemblés au châssis 2 par tout moyen de fixation adapté, rapide ou non, démontable ou non, tel que des vis de serrage ou similaire.

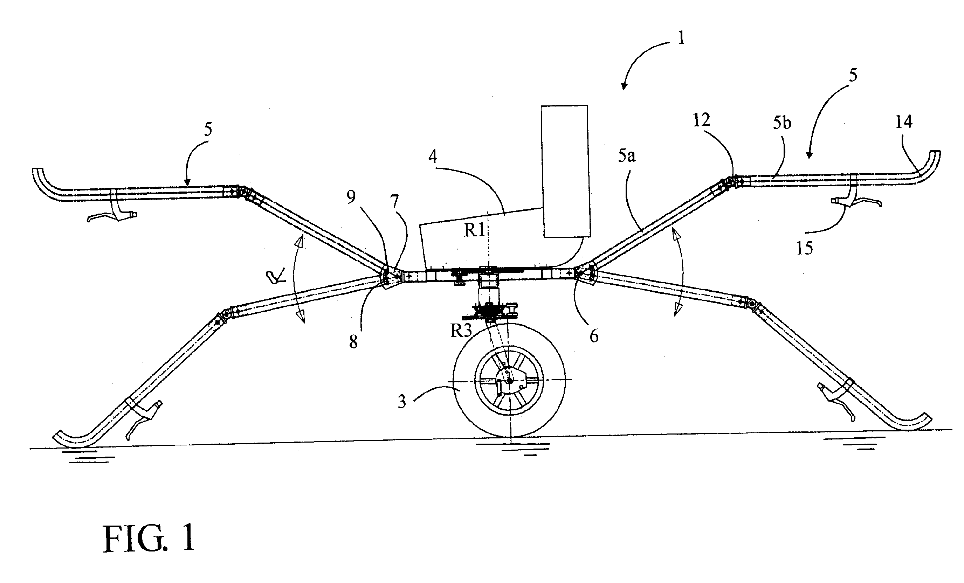

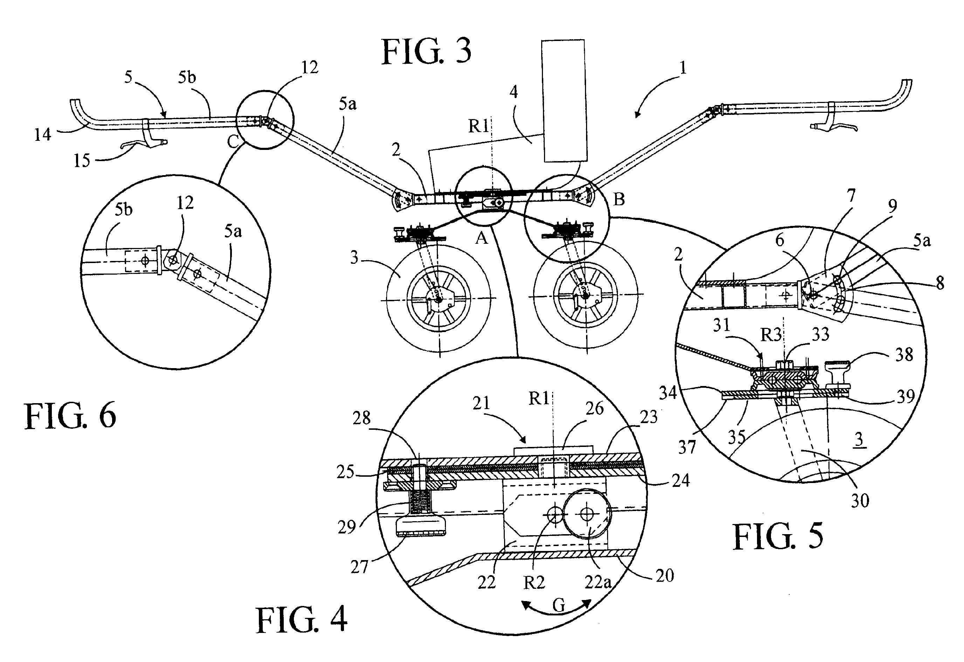

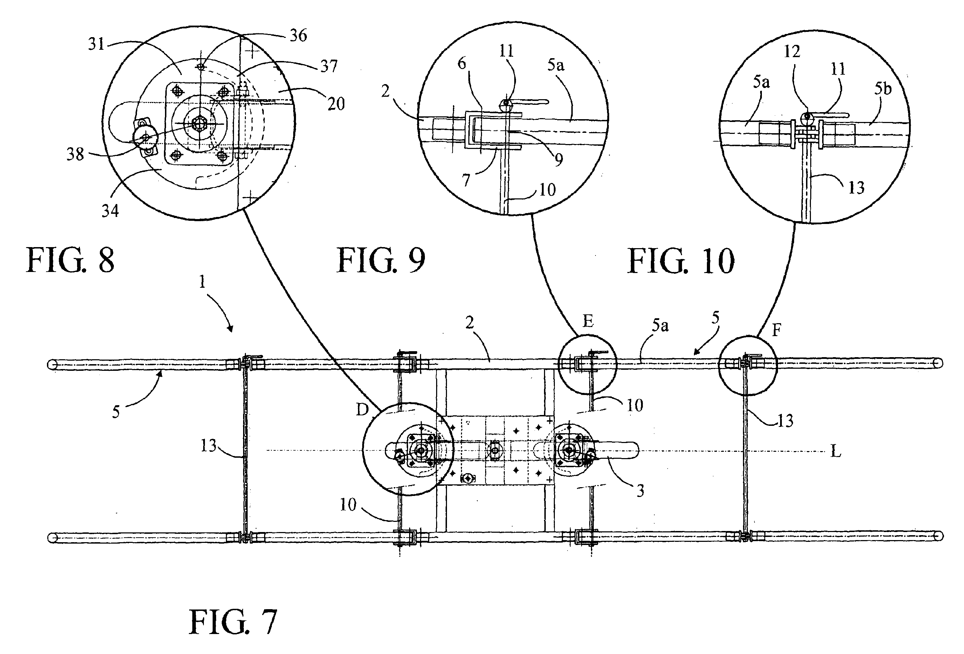

Dans l'exemple illustré, les moyens de manutention sont constitués de quatre bras de transport 5, disposés deux à l'avant et à l'arrière du châssis 2. Cet exemple n'est pas limitatif, les bras de transport 5 pouvant être remplacés par tout moyen équivalent, tel que des arceaux, des guidons, etc. Ces bras de transport 5 sont avantageusement montés sur le châssis 2 par un premier axe de pivotement 6 pour être mobiles entre au moins une position de transport, représentée en traits interrompus à la figure 1, dans laquelle ils sont relevés et aptes à être saisis manuellement par une personne en position debout, et une position de repos, représentée en traits forts à la figure 1, dans laquelle ils sont abaissés pour reposer au sol, former des béquilles et stabiliser le dispositif roulant 1 quelque soit la position des roues 3, facilitant ainsi le chargement de la personne. En référence plus particulièrement aux figures 3, 5, 7 et 9, chaque premier axe de pivotement 6 est associé à une platine 7 pourvue d'une lumière 8 s'étendant sur un secteur angulaire défini a, dans laquelle circule un téton 9 pour limiter l'angle de pivotement des bras de transport 5. Tout autre moyen équivalent permettant de contrôler la liberté de mouvement des bras de transport 5 peut convenir. On peut également ne pas mettre un tel moyen. Comme illustré à la figure 7, les bras de transport 5 sont assemblés deux à deux par des premières barres de jonction 10 comportant ledit téton 9. Un organe de serrage 11, du type par excentrique, est associé au téton 9 et permet de verrouiller les bras de transport 5 en position, de manière très rapide et sans outillage. Si l'on souhaite démonter les bras de transport 5 par rapport au châssis 2, on peut aussi dévisser complètement ces organes de serrage 11. En référence plus particulièrement aux figure 7 et 10, ces bras de transport 5 sont chacun constitués d'au moins deux tronçons 5a, 5b articulés entre eux par un second axe de pivotement 12 pour être mobiles entre une position déployée, comme représentée sur les figures, et une position repliée de stockage ou de transport, non représentée. Une seconde barre de jonction 13 permet d'assembler deux à deux les bras de transport 5 et définit le second axe de pivotement 12. Elle coopère avec un organe de serrage 11, du type par excentrique, permettant de verrouiller la position des tronçons 5a, 5b entre eux. Aucun moyen n'est prévu pour limiter le débattement angulaire des tronçons 5a, 5b entre eux, ce qui permet de les replier l'un contre l'autre en position de stockage ou de transport. L'organe de serrage 11 permet aussi par simple dévissage de démonter les tronçons 5a, 5b si besoin. Les bras de transport 5 sont terminés par des poignées 14 comportant des leviers de commande de frein 15 ainsi que d'autres commandes comme expliqué plus loin. Les poignées 14 forment les zones d'appui au sol lorsque les bras de transport 5 sont en position de repos.

Les roues 3 qui peuvent être des roues folles, sont montées sur un support de roues 20 assemblé au châssis 2 par une première liaison pivotante 21, pour être mobile en rotation autour d'un premier axe de rotation R1 sensiblement vertical entre au moins une première position, représentée aux figures 1, 2 et 11, dans laquelle les roues 3 sont parallèles entre elles et à l'axe longitudinal L du dispositif roulant 1, et une seconde position, représentée à la figure 3, dans laquelle les roues 3 sont alignées et confondues avec l'axe longitudinal L.

Dans l'exemple représenté et illustré à la figure 3, ce support de roues 20 comporte au moins une lame ou une plaque en acier ressort, plane, incurvée, pliée en V inversé ou autre, et agencée pour constituer au moins en partie des moyens amortisseurs du dispositif roulant 1. Il est bien entendu possible de remplacer cette lame ressort par tout autre moyen amortisseur équivalent mettant en oeuvre des ressorts, des pistons et antres. L'épaisseur de cette lame et le type d'acier utilisé sont déterminés en fonction des contraintes et de l'effet amortisseur souhaité. En référence plus particulièrement à la figure 4, le support de roues 20 est fixé dans sa partie centrale à un balancier 22 monté sur le châssis 2 par la première liaison pivotante 21. Ce balancier 22 autorise le pivotement du support de roues 20 selon la flèche double G, autour d'un axe de rotation R2 perpendiculaire au premier axe de rotation R1, et complète avantageusement l'effet amortisseur et compensation des reliefs du sol. Ce balancier 22 comporte un système de verrouillage 22a permettant de bloquer le mouvement du balancier 22, notamment pour faciliter le déplacement du dispositif lorsqu'il est manutentionné par une seule personne.

Dans l'exemple représenté toujours en référence à la figure 4, la première liaison pivotante 21 comporte au moins deux plateaux 23, 24 superposés par l'intermédiaire d'un disque 25 en Téflon® ou en toute matière équivalente ayant un très faible coefficient de frottement pour que les plateaux 23, 24 puisse glisser l'un par rapport à l'autre sans usure, ni bruit. Toute autre forme de réalisation équivalente peut convenir tel qu'un plateau ou similaire. De même, au moins un des plateaux 23, 24, ou les deux peuvent comporter un revêtement favorisant le glissement, en remplacement du disque 25. Un des plateaux 23 est solidaire du châssis 2 et l'autre plateau 24 est solidaire du support de roues 20 par l'intermédiaire du balancier 22. Ils sont assemblés par un pivot 26 et coopèrent avec des moyens de verrouillage agencés pour, en position déverrouillée, autoriser le déplacement du support de roues 20 de la première positon à la seconde position et inversement, et en position verrouillée, interdire ce déplacement. Ces moyens de verrouillage comportent un doigt de blocage 27 monté sur l'un des plateaux 24 pour coopérer avec au moins deux crans d'indexage 28 prévus dans l'autre plateau 23 définissant les première et seconde positions. Ce doigt de blocage 27 est sollicité en position verrouillée par un ressort de rappel 29 et est commandé en position déverrouillée manuellement et/ou par une commande à distance sous la forme d'une manette (non représentée) située vers les poignées 14 et une transmission à câble (non représeutée). Bien entendu tout autre moyen de verrouillage/déverrouillage équivalent peut convenir.

Chaque roue 3 est elle-même montée sur un support d'essieu 30 pivotant assemblé au support de roues 20 par une seconde liaison pivotante 31 autour d'un second axe de rotation R3 sensiblement vertical, pour pouvoir la positionner parallèlement à l'axe longitudinal L du dispositif roulant 1 quelque soit la position du support de roues 20. La seconde liaison pivotante 31 comporte un roulement à bille 32 ou similaire, dont une des bagues est solidaire du support de roues 20 et l'autre bague est solidaire du support d'essieu 30 de la roue 3. Cet ensemble est assemblé par un pivot 33, et coopère avec des moyens d'indexage permettant de limiter le débattement angulaire ou le pivotement de chaque roue 3. Ces moyens d'indexage comportent deux platines 34, 35 superposées, l'une solidaire du roulement à billes 32 et l'autre solidaire de la roue 3. Une des platines porte un pion 36 (cf. fig. 8) agencé pour circuler dans une piste 37 prévue sur l'autre platine s'étendant sur un secteur circulaire inférieur à 360° et d'environ 180°, ceci pour éviter d'enrouler les câbles de freinage et de commande à distance des moyens de verrouillage. Des moyens de verrouillage sont également prévus pour, en position déverrouillée, autoriser le pivotement du support d'essieu 30, et en position verrouillée, interdire ce pivotement. Ils peuvent être commandés manuellement et/ou à distance depuis les poignées 14 par une liaison à câble (non représentée) et comportent au moins un doigt de blocage 38 monté sur l'une des platines pour coopérer avec au moins deux crans d'indexage prévus dans l'autre platine définissant les positions dans lesquelles la roue 3 est parallèle à l'axe longitudinal L du dispositif roulant 1 pour les deux positions du support de roues 20.

Lorsque le dispositif roulant 1 doit être stocké ou transporté, les bras de transport 5 sont repliés ou démontés en dévissant partiellement ou totalement les organes de serrage 11, ce qui permet de réduire considérablement l'encombrement du dispositif pour pouvoir le loger dans le coffre d'un véhicule. Le siège 4 peut le cas échéant être démonté. Lorsque l'on souhaite utiliser le dispositif roulant 1, on déplie ou on remonte les bras de transport 5 à l'aide des organes de serrage 11 et on les place en position de repos dans laquelle les poignées 14 reposent sur le sol et forment des béquilles de stabilisation. Cette position stable permet de charger une personne à mobilité réduite de manière simple et avec l'aide d'une seule personne. Préalablement, on choisit la position des roues 3 en fonction du terrain sur lequel on souhaite déplacer le dispositif roulant 1. Par exemple, pour pratiquer des sentiers forestiers ou en montagne, on choisira de placer les roues 3 en position alignée, en verrouillant la roue 3 placée à arrière 3 pour l'empêcher de pivoter et en déverrouillant la roue 3 placée à l'avant pour permettre son pivotement sur environ 180° et le guidage du dispositif. Dans ce cas, deux personnes valides sont utiles pour piloter le dispositif roulant 1 étant donné qu'elles doivent assurer l'équilibre latéral du dispositif. Sur les autres terrains, on choisira de placer les roues 3 parallèles en verrouillant les roues 3 pour les empêcher de pivoter, ainsi que le balancier 22 pour l'empêcher de balancer horizontalement. Dans ce cas, une seule personne valide suffit pour piloter le dispositif roulant 1 soit par poussée soit par traction.

La figure 11 illustre un autre mode d'utilisation du dispositif roulant 1 selon l'invention dans lequel il est attelé à un animal, tel qu'un poney, un cheval ou autre, permettant de varier les promenades qu'il est possible de proposer à des personnes à mobilité réduite, notamment à des enfants. Dans ce cas, les tronçons 5b des bras de transport 5, côté cheval, sont démontés et remplacés par des timons 5c attelés à l'animal, et les roues 3 sont soit placées en position parallèle et sont verrouillées pour empêcher leur pivotement, soit alignées avec une personne valide à l'arrière pour circuler sur des sentiers.

### Possibilités d'application industrielle :

Le dispositif roulant 1 est de préférence réalisé en matériaux légers, tel que l'aluminium ou similaire pour le châssis 2 et les bras de transport 5. Le siège 4 peut être en matières synthétiques. Les roues 3 et tous les autres composants sont choisis en fonction de leurs performances et de leurs poids. Le dispositif roulant 1 complet est conçu pour être très léger, pour faciliter son portage, même sur le dos par un secouriste qui doit porter secours à un randonneur en difficultés. En utilisation, son faible poids permet aux personnes qui tractent le dispositif roulant 1 de le soulever en cas d'obstacle rencontré sur les chemins. Le dispositif roulant 1 tel que décrit peut bien entendu être décliné en une version motorisée, dans laquelle chaque roue 3 est couplée à un petit moteur électrique dont la commande est déportée au niveau des poignées 14, les batteries d'alimentation étant logées dans le châssis 2. On peut aussi prévoir un kit de motorisation permettant d'équiper les dispositifs roulants 1 en service après-vente.

Il ressort clairement de cette description que l'invention permet d'atteindre les buts fixés, à savoir un dispositif simple, économique et polyvalent, pouvant être utilisé dans différents domaines techniques.

La présente invention n'est pas limitée à l'exemple de réalisation décrit mais s'étend à toute modification et variante évidentes pour un homme du métier tout en restant dans l'étendue de la protection définie dans les revendications annexées.

## Revendications

1. Dispositif roulant (1) pour transporter au moins une personne et comportant un châssis (2) porté par au moins deux roues (3), des moyens récepteurs (4) pour porter ladite personne en position assise ou couchée, et des moyens de manutention (5) pour mettre en mouvement ledit dispositif par au moins une autre personnes, **caractérisé en ce que** lesdites roues (3) sont montées sur un support de roues (20) assemblé audit châssis (2) par une première liaison pivotante (21) autour d'un premier axe de rotation (R1) sensiblement vertical, le support de roues (20) étant mobile entre au moins une première position dans laquelle les roues (3) sont parallèles entre elles et à l'axe longitudinal (L) du dispositif roulant (1), et une seconde position dans laquelle les roues (3) sont alignées et confondues avec ledit axe longitudinal (L).

2. Dispositif roulant selon la revendication 1, **caractérisé en ce que** ladite première liaison pivotante (21) coopère avec des moyens de verrouillage agencés pour en position déverrouillée autoriser le déplacement du support de roues (20) de la première position à la seconde position et inversement, et en position verrouillée interdire ce déplacement.

3. Dispositif roulant selon la revendication 2, **caractérisé en ce que** les moyens de verrouillage sont commandés manuellement et/ou à distance depuis les moyens de manutention (5) par une liaison à câble.

4. Dispositif roulant selon la revendication 2, **caractérisé en ce que** la première liaison pivotante (21) comporte au moins deux plateaux (23, 24), l'un solidaire du châssis (2) et l'autre solidaire du support de roues (20), assemblés par un pivot (26), et **en ce que** les moyens de verrouillage comportent au moins un doigt de blocage (27) monté sur l'un des plateaux pour coopérer avec au moins deux crans d'indexage (28) prévus dans l'autre plateau définissant lesdites première et seconde positions.

5. Dispositif roulant selon la revendication 1, **caractérisé en ce que** chaque roue (3) est elle-même montée sur un support d'essieu (30) pivotant assemblé audit support de roues (20) par une seconde liaison pivotante (31) autour d'un second axe de rotation (R3) sensiblement vertical, chaque roue étant mobile pour rester parallèle à l'axe longitudinal (L) du dispositif roulant (1) quelque soit la position du support de roues (20).

6. Dispositif roulant selon la revendication 5, **caractérisé en ce que** chaque seconde liaison pivotante (31) coopère avec des moyens de verrouillage agencés pour en position déverrouillée autoriser le pivotement de la roue (3), et en position verrouillée interdire ce pivotement.

7. Dispositif roulant selon la revendication 6, **caractérisé en ce que** les moyens de verrouillage sont commandés manuellement et/ou à distance depuis les moyens de manutention (5) par une liaison à câble.

8. Dispositif roulant selon la revendication 6, **caractérisé en ce que** la seconde liaison pivotante (31) comporte au moins un roulement à billes (32) ou similaire monté entre le support de roues (20) et le support d'essieu (30) de chaque roue par un pivot (33), et des moyens d'indexage agencés pour limiter le pivotement de chaque roue.

9. Dispositif roulant selon la revendication 8, **caractérisé en ce que** les moyens d'indexage comportent au moins deux platines (34, 35), l'une solidaire du roulement à billes (32) et l'autre solidaire du support d'essieu (30), un pion (36) solidaire d'une des platines circulant dans une piste (37) prévue dans l'autre platine et s'étendant sur un secteur angulaire inférieur à 360°.

10. Dispositif roulant selon la revendication 9, **caractérisé en ce que** les moyens de verrouillage comportent au moins un doigt de blocage (38) monté sur l'une des platines pour coopérer avec au moins deux crans d'indexage (39) prévus dans l'autre platine définissant les positions dans lesquelles la roue (3) est parallèle à l'axe longitudinal (L) du dispositif roulant (1) dans les première et seconde positions du support de roues (20).

11. Dispositif roulant selon la revendication 1, **caractérisé en ce que** lesdits moyens de manutention comportent des bras de transport (5) montés sur ledit châssis (2) par un premier axe de pivotement (6), ces bras de transport étant mobiles entre au moins une position de transport dans laquelle ils sont relevés et aptes à être saisis manuellement par une personne en position debout, et une position de repos dans laquelle ils sont abaissés pour reposer au sol et stabiliser le dispositif roulant.

12. Dispositif roulant selon la revendication 11, **caractérisé en ce que** lesdits bras de transport (S) sont chacun constitués d'au moins deux tronçons (5a, 5b) articulés entre eux par un second axe de pivotement (12) parallèle au premier axe de pivotement (6), pour être mobiles entre une position déployée et une position repliée de stockage ou de transport.

13. Dispositif roulant selon la revendication 1, **caractérisé en ce que** ledit support de roues (20) comporte au moins une lame en acier ressort agencée pour constituer au moins en partie des moyens amortisseurs du dispositif roulant.

14. Dispositif roulant selon la revendication 13, **caractérisé en ce que** ledit support de roues (20) est montée sur ledit châssis (2) par un balancier (22) autour d'un axe de rotation (R2) perpendiculaire au premier axe de rotation (R1) et agencé pour compléter au moins en partie les moyens amortisseurs dudit dispositif roulant.
